(19) **Europäisches Patentamt**

**European Patent Office**

**Office européen des brevets**

(11) **EP 0 747 880 B1**

(12) **EUROPÄISCHE PATENTSCHRIFT**

(45) Veröffentlichungstag und Bekanntmachung des Hinweises auf die Patenterteilung:
**10.10.2001   Patentblatt 2001/41**

(51) Int Cl.⁷: **G10L 15/20**

(21) Anmeldenummer: **96201572.3**

(22) Anmeldetag: **05.06.1996**

(54) **Spracherkennungssystem**

System for speech recognition

Système de reconnaissance de la parole

(84) Benannte Vertragsstaaten:
**DE FR GB**

(30) Priorität: **10.06.1995  DE 19521258**

(43) Veröffentlichungstag der Anmeldung:
**11.12.1996   Patentblatt 1996/50**

(73) Patentinhaber:
- **Philips Corporate Intellectual Property GmbH**
**52064 Aachen (DE)**
Benannte Vertragsstaaten:
**DE**
- **Koninklijke Philips Electronics N.V.**
**5621 BA Eindhoven (NL)**
Benannte Vertragsstaaten:
**FR GB**

(72) Erfinder: **Kalveram,Hans,Dr.-Ing.,**
**c/o Philips Patentvw.GmbH**
**22335 Hamburg (DE)**

(74) Vertreter: **Volmer, Georg, Dipl.-Ing. et al**
**Philips Corporate Intellectual Property GmbH,**
**Habsburgerallee 11**
**52064 Aachen (DE)**

(56) Entgegenhaltungen:
**EP-A- 0 644 526          WO-A-94/18666**
**WO-A-95/15550**

Bemerkungen:
Die Akte enthält technische Angaben, die nach dem Eingang der Anmeldung eingereicht wurden und die nicht in dieser Patentschrift enthalten sind.

**Beschreibung**

Die Erfindung bezieht sich auf ein Spracherkennungssystem.

Die automatische Erkennung gesprochener Sprache kann für eine Vielzahl von Anwendungen eingesetzt werden. Dabei wird die Spracherkennung häufig durch Störgeräusche beeinträchtigt, die den empfangenen Sprachsignalen überlagert sind. Dies führt zu einer erhöhten Fehlerrate bei der Spracherkennung. Störgeräusche werden beispielsweise durch eine Störquelle erzeugt, die sich in der Umgebung eines das Spracherkennungssystem enthaltenden Geräts befindet.

Auch Leitungsechos können solche Störsignale sein, wenn das Spracherkennungssystem in einem Telekommunikationsendgerät eingesetzt wird, das an ein Fernsprechnetz gekoppelt ist. Aus der deutschen Patentanmeldung P 44 27 124.7 ist eine Kommunikationsanordnung bekannt, die Mittel zur Erzeugung von Sprachansagen und zur Erkennung von Sprachsignalen enthält. Mit Hilfe der Sprachansage- und Spracherkennungsmittel erfolgt eine Kommunikation mit einem entfernten Teilnehmer. Durch Reflexionen von Sprachansagen bei der Übertragung zum entfernten Teilnehmer werden unerwünschte Echos erzeugt, die die Erkennung von Sprachsignalen des entfernten Teilnehmers beeinträchtigen. Eine Kompensation der Echos zur Reduzierung der Fehlerrate bei der Spracherkennung erfolgt im Spektralbereich, indem Differenzwerte zwischen Kurzzeitspektralwerten von Empfangssignalen des Telekommunikationsgeräts und geschätzten Kurzzeitspektralwerten der Echos gebildet werden. Zur Abschätzung der Kurzzeitspektralwerte der Echos werden Kurzzeitspektralwerte der Sendesignale (Sprachansagen) des Telekommunikationsgeräts ermittelt und einer adaptiven Gewichtung unterworfen.

Die Differenzspektralwerte, bei denen die Echoeinflüsse unterdrückt sind, werden von den Spracherkennungsmitteln ausgewertet.

Aus der internationale Anmeldung WO 95/15550 ist ein System bekannt, in dem Störgeräusche in einem Sprachsignal mittels eines speziellen Wiener Filters unterdrückt werden, das regelmäßig in Sprechpausen an eine entsprechend neue Schätzung des Störsignals angepaßt wird.

Der Erfindung liegt die Aufgabe zugrunde, ein Spracherkennungssystem zu schaffen, das eine fehlerminimierte Spracherkennung gewährleistet.

Die Aufgabe wird dadurch gelöst, daß

- Mittel zum Empfang von mit Störsignalen überlagerten Sprachsignalen,
- erste Spektralanalysemittel zur Lieferung von aus den gestörten Sprachsignalen abgeleiteten und in ersten Spektralvektoren zusammengefaßten ersten Spektralwerten,
- Mittel zur Lieferung von Schätzwerten der Störsignale,
- zweite Spektralanalysemittel zur Bildung von in zweiten Spektralvektoren zusammengefaßten zweiten Spektralwerten aus den Störsignalschätzwerten,
- eine Speichereinheit zur Speicherung von aus Referenzspektralwerten bestehenden Referenzvektoren, denen Indizes zugeordnet sind und die den Spektren von Referenzsprachsignalen entsprechen,
- Mittel zur Bildung von den Indizes zugeordneten Vergleichsvektoren aus den Referenzvektoren und den zweiten Spektralvektoren, wobei eine fortlaufende Anpassung von mindestens einem der Vergleichsvektoren an die zweiten Spektralvektoren vorgesehen ist, und
- Mittel zur Auswahl von Indizes durch Vergleich der Vergleichsvektoren mit den ersten Spektralvektoren

vorgesehen sind.

Die Schätzwerte der Störsignale enthalten zusätzliches Wissen über das momentane Störsignal. Dieses kann beispielsweise mit Hilfe eines zusätzlichen Mikrofons in der Nähe einer die Störsignale generierenden Störquelle aufgenommen werden, um die

Störsignale weitgehend getrennt von den Sprachsignalen zur Verfügung zu haben und abschätzen zu können. Stellen die Störsignale Echos von a priori bekannten Audiosignalen (z.B. gespeicherten Sprachansagen bei Anrufbeantwortern oder Musikwiedergabe in Kraftfahrzeugen) dar, sind aus den die Echos generierenden Original-Audiosignalen die Störsignale durch Abschätzung einer Übertragungsfunktion bestimmbar. Durch die fortlaufende Anpassung der aus den Referenzvektoren und den zweiten Spektralvektoren (Störvektoren) abgeleiteten Vergleichsvektoren wird eine fehlerminimierte Spracherkennung gewährleistet, bei der die aufeinanderfolgenden ausgewählten Indizes dem Sprachsignalverlauf mit Sprachsignalpausen entsprechen und somit das jeweilige Spracherkennungsergebnis repräsentieren. Das Spracherkennungssystem wird vorzugsweise mit Hilfe eines Signalprozessors realisiert, der die Signalverarbeitung für das Spracherkennungssystem programmgesteuert durchführt.

Der Vergleich wird insbesondere auf die Weise durchgeführt, daß Distanzen zwischen den ersten Spektralvektoren und den Vergleichsvektoren gebildet werden, die ein Maß für die Ähnlichkeit zwischen den ersten Spektralvektoren und den Vergleichsvektoren darstellen, wobei eine geringe Distanz einer hohen Ähnlichkeit entspricht. Dabei werden unter der Voraussetzung, daß mehrere Vergleichsvektoren einem Index zugeordnet werden, die Spracherkennungsergebnisse verbessert, wenn vorgebbare Bewertungszahlen für die Vergleichsvektoren eingeführt werden. Bei der Auswahl der Indizes werden diejenigen ausgewählt, die zu einer Distanzminimierung führen, wobei insbesondere eine Distanzsummenminimierung erfolgt. Die Referenzvektoren entsprechen den Spektren von Referenzsprachsignalen, die vor Inbetriebnahme des Spracherkennunssystems ermittelt und in der Speichereinheit abgelegt werden. Das Spracherkennungssystem mit den erfindungsgemäßen Merkmalen verhält sich in bezug auf die Spracherkennung robust gegen Störsignale, die den Sprachsignalen überlagert sind. Sowohl Störgeräusche aus der Umgebung des Systems als auch insbesondere langgezogene bzw. mit einer großen Verzögerungs zeit eintreffende und als Störsignale wirkende Echosignale, die z.B. durch Reflexionen in einem Fernsprechnetz entstehen, werden effektiv kompensiert.

Die Schätzwerte der Störsignale lassen sich insbesondere aus einer unabhängigen Aufnahme der Störsignale in der Nähe der zugehörigen Störsignalquelle ableiten. Dazu wird in der Nähe der Störsignalquelle ein Mikrofon angeordnet. Bei Echos von Sprachsignalen oder anderen Audiosignalen ist die Struktur der als Störsignal auftretenden Echos a priori bekannt. Dies wird zur Bildung der Schätzwerte der Störsignale ausgenutzt. Auch eine Kombination dieser Ansätze ist möglich.

Eine Ausgestaltung der Erfindung, bei der jeweils einem Index mindestens ein Referenzvektor und ein oder mehrere aufeinanderfolgende zweite Spektralvektoren zur Bildung einer entsprechenden Anzahl an Vergleichsvektoren für diesen Index zugeordnet sind und bei der beim Vergleich mit den ersten Spektralvektoren eine Bewertung der einzelnen Vergleichsvektoren durch Addition von Bewertungszahlen zu der jeweiligen Vektordistanz vorgesehen ist, liefert besonders zuverlässige Spracherkennungsergebnisse.

Vorteilhaft dient das Spracherkennungssystem zur Erkennung von auf akustischem Weg übertragenen Sprachsignalen eines nahen Benutzers eines das Spracherkennungssystem enthaltenden Geräts, wobei das Spracherkennungssystem zur Steuerung von Teilfunktionen des Geräts dient. Insbesondere zur Steuerung von Funktionen eines Rundfunkempfängers in einem Kraftfahrzeug oder anderer Geräte des Kraftfahrzeugs, beispielsweise eines Fensterhebers, kann das Spracherkennungsssystem dienen. Auch zur Erkennung von über ein Fernsprechnetz übertragenen Sprachsignalen, die zur Steuerung von Teilfunktionen eines Telekommunikationsgeräts dienen, kann das Spracherkennungssystem verwendet werden, insbesondere bei leitungsgebundenen Fernsprechendgeräten, Mobiltelephonen und Anrufbeantwortern. Beide Ansätze, d.h. die Spracherkennung von Sprachsignalen eines nahen bzw. eines fernen Teilnehmers, sind sowohl einzeln als auch in Kombination anwendbar.

Das Spracherkennungssystem kann auch zur Steuerung mehrerer verschiedener Geräte verwendet werden. Auch die Verwendung in Diktiersystemen ist vorteilhaft.

Ausführungsbeispiele der Erfindung werden nachstehend anhand der Zeichnungen näher erläutert.

Es zeigen:

Fig. 1            ein erfindungsgemäßes Spracherkennungssystem,

Fig. 2            eine Anordnung, bei der ein Gerät um eine dialoggeführte Benutzerschnittstelle erweitert ist, die das erfindungsgemäße Spracherkennungssystem enthält und

Fig. 3 und 4    Diagramme zum zeitlichen Ablauf der Spracherkennung.

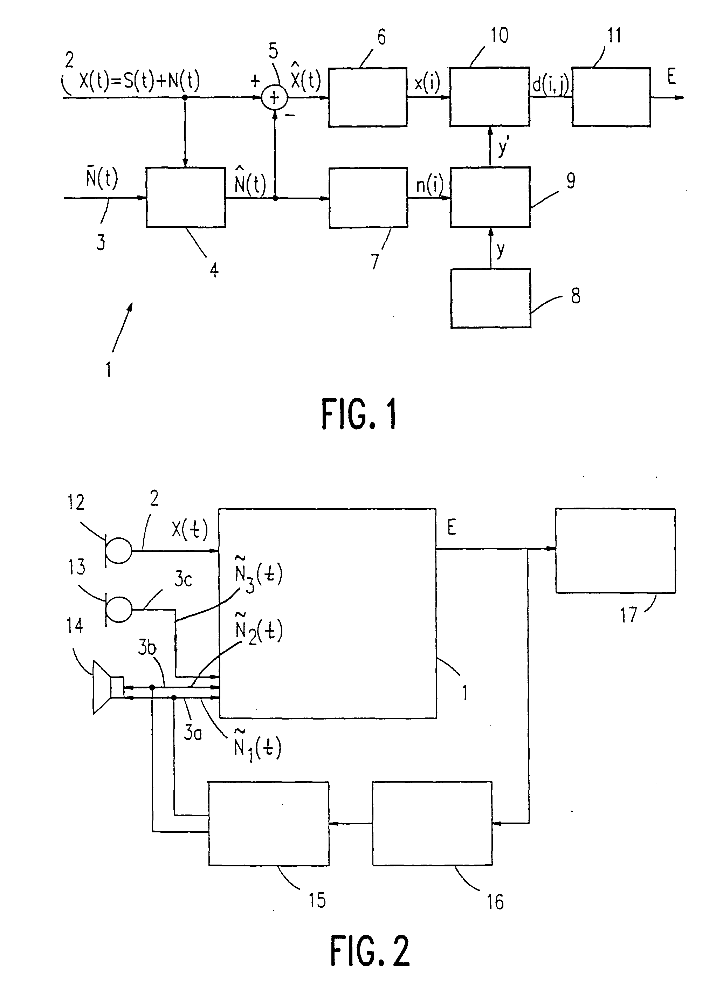

Das in Fig. 1 dargestellte erfindungsgemäße Spracherkennungssystem 1 enthält einen Empfangszweig 2 zum Empfang von gestörten Sprachsignalen X(t), die sich additiv aus ungestörten Sprachsignalen S(t) und Störsignalen N(t) zusammensetzen. Über einen zweiten Empfangszweig 3 werden dem Spracherkennungssystem 1 Signale Ñ(t) zugeführt, die die Signale einer Störsignalquelle repräsentieren und die Störsignale N(t) verursachen. Der Zusammenhang zwischen den Störsignalen N(t) und den Signalen Ñ(t) wird durch eine Übertragungsfunktion hergestellt, die den Übertragungsweg von der Störsignalquelle zu den am Eingang des Empfangszweiges 2 angeordneten Empfangsmitteln, die die gestörten Sprachsignale X(t) liefern, beschreibt.

Für den Fall, daß das Spracherkennungssystem 1 in einem Anrufbeantworter integriert ist und die Störsignale N(t) Leitungsechos darstellen, die durch Reflexionen von Sprachansagen im Fernsprechnetz bei der Fernabfrage des Anrufbeantworters entstehen, sind die Signale Ñ(t) durch die im Anrufbeanworter gespeicherten Sprachansagen bestimmt und verfügbar. Ist das Spracherkennungssystem 1 in ein Gerät integriert, das in einem Kraftfahrzeug benutzt wird und werden die Störsignale N(t) als von den Fahrgeräuschen verursacht angesehen, so erhält man die Signale Ñ(t) durch Aufnahme der Fahrgeräusche mit Hilfe eines zusätzlichen Mikrofons innerhalb des Kraftfahrzeugs, das die Störgeräusche weitgehend unabhängig von zu erkennenden Sprachsignalen S(t) detektiert. Die Signale Ñ(t) können dabei auch akustische Echos von zum Benutzer des Geräts abgestrahlten Sprachansagen repräsentieren, wobei die Sprachansagen zur Benutzerführung dienen. Dabei ist unter Umständen eine mehrkanalige Aufnahme von Signalen Ñ(t) vorteilhaft, bei der akustische Echos und sonstige Störgeräusche (z.B. Fahrgeräusche) getrennt aufgenommen werden.

Durch ein adaptives Filter 4, das an die genannte Übertragungsfunktion zwischen der Störsignalquelle und den Empfangsmitteln des Empfangszweiges 2 angepaßt wird, werden aus den Signalen Ñ(t) Störsignalschätzwerte

$\hat{N}$(t) gebildet, die als Näherung für die Störsignale N(t) dienen. Das adaptive Filter 4 ist mit dem Empfangszweig 2 gekoppelt, so daß in Sprachpausen, in denen die Signale X(t) nur aus den Störsignalen N(t) bestehen, das adaptive Filter 4 entsprechend der genannten Übertragungsfunktion eingestellt wird, die sich dann unmittelbar aus den vorliegenden Signalen Ñ(t) und X(t)=N(t) ergibt.

Durch Subtrahiermittel 5 werden von den gestörten Sprachsignalen X(t) die Störsignalschätzwerte Ñ(t) subtrahiert und Sprachsignalschätzwerte X̂(t) = X(t)-N(t) gebildet, die die Sprachsignale S(t) annähern. Auf diese Weise können die Störsignale N(t), die in den Signalen X(t) enthalten sind, schon teilweise kompensiert werden.

Ein Funktionsblock 6 faßt eine Kurzzeitspektralanalyse zusammen, der die geschätzten Sprachsignale X̂(t) unterzogen werden. Die als Abtastwerte vorliegenden Zeitsignale X̂(t) werden dann in Zeitabschnitte konstanter Länge unterteilt. Anschließend wird mit einer Spektraltransformation, z.B. einer Fourier-Transformation, das Leistungsdichtespektrum berechnet. Die sich ergebenden Spektralwerte werden unterabgetastet, um deren Anzahl zu reduzieren. In einer besonderen Ausführungsform werden die sich ergebenden Spektralwerte logarithmiert und anschließend einer Hochpaßfilterung unterzogen. Dieses ist in der EP 0 508 547 A3 näher beschrieben. Es ergibt sich eine weitgehende Unabhängigkeit vom Amplitudenfrequenzgang und der Aussteuerung der am Empfangszweig 2 empfangenen gestörten Sprachsignale X. Der Funktionsblock 6 erzeugt auf diese Weise aus den Sprachsignalschätzwerten X̂(t) erste Spektralvektoren x(i) mit D Komponenten bzw. Spektralwerten xd(i) mit d = 1,2,...,D. Dabei bezeichnet i den der Kurzzeitspektralanalyse zugrundeliegenden Zeitabschnitt von X̂(t).

Die Störsignalschätzwerte Ñ(t), die Zeitsignale darstellen, werden einem Funktionsblock 7 zugeführt, der eine Kurzzeitspektralanalyse wie der Funktionsblock 6 durchführt und zweite Spektralvektoren n(i) mit D Komponenten nd(i) (d = 1,2,...,D) erzeugt. Das Spracherkennungssystem 1 wird vorzugsweise mit Hilfe eines Signalprozessors realisiert. Dabei werden die beiden durch die Funktionsblöcke 6 und 7 zusammengefaßten Spektraltransformationen nacheinander ausgeführt.

In einem Speicher 8 sind Referenzvektoren y(j,m) gespeichert (j = 1,2,... ; m = 1,2,...,M), die jeweils durch das Kurzzeitspektrum eines Referenzsprachsignals gebildet werden. Einem zusätzlichen Index j=0 wird eine Sprachpause zugeordnet. Ein entsprechender Referenzvektor ist ebenfalls im Speicher 8 abgelegt. Ein Referenzsprachsignal stellt einen Wortabschnitt dar, der durch den Index j beschrieben wird. M gibt die Anzahl an Referenzvektoren bzw. Referenzsprachsignalen an, die zur Beschreibung eines einzelnen Wortabschnitts oder einer Sprachpause vorgesehen sind. Verschiedene Referenzsprachsignale für einen einzelnen bestimmten Wortabschnitt ergeben sich dann, wenn verschiedene Sprechertypen verwendet werden. Verschiedene Referenzsprachsignale für eine Sprachpause ergeben sich durch Berücksichtigung unterschiedlicher Störquellentypen. Ist M größer als 1, wird mit Bewertungszahlen g(j,m) angegeben, wie gut der jeweilige Vergleichsvektor zur Beschreibung des zu j gehörenden Wortabschnitts oder der zugehörigen Sprachpause geeignet ist. Die Verwendung dieser Bewertungszahlen wird an späterer Stelle näher erläutert. Zur Bildung der Referenzvektoren y(j,m) werden die für die jeweilige Spracherkennungsanwendung erforderlichen Referenzsprachsignale vor Inbetriebnahme des Spracherkennungssystems aufgenommen und der Kurzzeitspektralanalyse gemäß der Verarbeitung durch die Funktionsblöcke 6 und 7 unterworfen. Die sich aus einer Mittelwertbildung ergebenden Spektralvektoren werden als Referenzvektoren y(j,m) in der Speichereinheit 8 abgelegt.

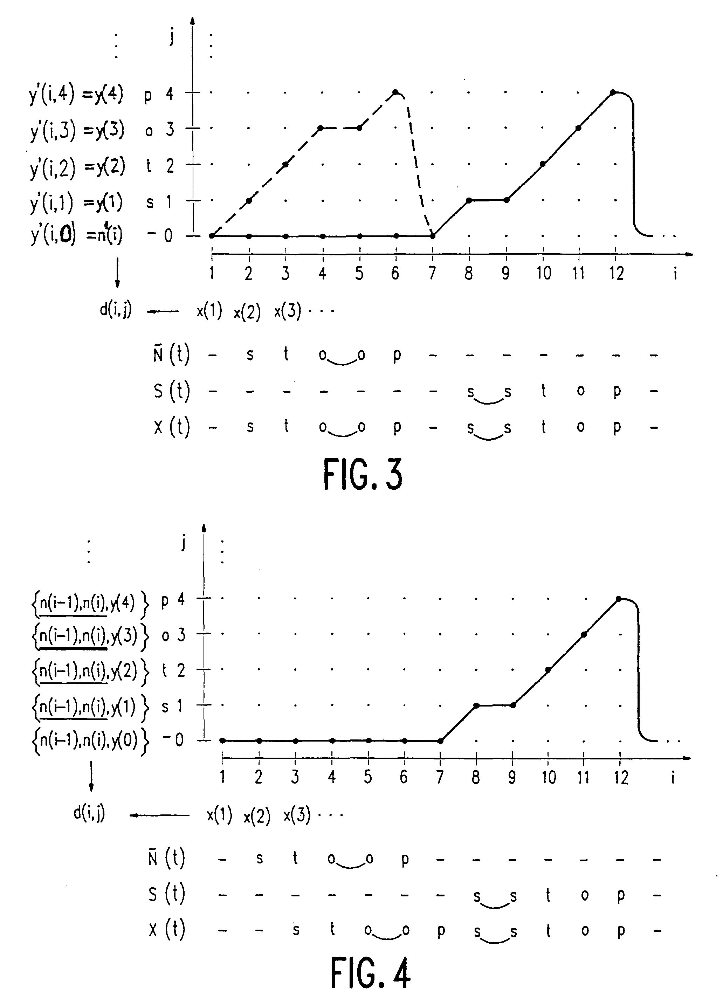

In Fig. 2 ist das erfindungsgemäße Spracherkennungssystem 1 Bestandteil einer dialoggeführten Benutzerschnittstelle für ein Gerät 17 in einem Kraftfahrzeug. Das Gerät 17 ist z.B. ein Mobiltelephon, ein Verkehrsinformationssystem oder ein Rundfunkempfänger. Wenigstens ein Teil der Funktionen des Geräts 17 wird durch die Spracherkennungsergebnisse E des Spracherkennungssystems gesteuert, z.B. kann ein Spracherkennungsergebnis E eine Zielwahl bei Integration in ein Mobiltelephon auslösen. Der Empfangszweig 2 des Spracherkennungssystems 1 ist mit einem auf den Fahrer des Kraftfahrzeugs ausgerichteten Mikrophon 12 verbunden und dient zum Empfang von Sprachsignalen des Fahrers. Der zweite Empfangszweig 3 besteht aus drei Empfangspfaden 3a, 3b und 3c. Über die Empfangspfade 3a und 3b werden dem Spracherkennungssystem mehrkanalig die von einem Audioverstärker 15 an eine Lautsprecheranordnung 14 übertragenen Stereo-Audiosignale als Signale Ñ₁(t) und Ñ₂(t) zugeführt, die nach einer Abstrahlung über die Lautsprecher 14 auf die Empfangssignale X(t) des Empfangszweiges 2 störend einwirken und sich Sprachsignalen des Fahrers des Kraftfahrzeugs überlagern. Weiterhin ist ein zusätzliches Mikrophon 13 vorgesehen, das zur Aufnahme von Störgeräuschen dient und dessen Mikrophonsignale als Signal Ñ₃(t) dem Empfangspfad 3c zugeführt werden. Da in diesem besonderen Fall über den Empfangszweig 3 auf drei Empfangspfaden 3a, 3b und 3c mehrere verschiedene Signale Ñ₁(t), Ñ₂(t) und Ñ₃(t) empfangen werden, die jeweils Signalen einer Störsignalquelle entsprechen, ist für eine aufwandsgünstige Verarbeitung dieser Signale das Sprachverarbeitungssystem nach Fig. 1 dahingehend zu modifizieren, daß auf das adaptive Filter 4 und und die Subtrahiermittel 5 bzw. die Subtraktion durch die Subtrahiermittel 5 verzichtet wird. Die Verarbeitung der Signale Ñ₁(t), Ñ₂(t) und Ñ₃(t) wird später bei der Beschreibung von Fig. 4 noch näher erläutert.

Eine Dialogsteuerung 16 generiert Sprachausgaben als Rückmeldungen an den Fahrer des Kraftfahrzeugs in Abhängigkeit von den Erkennungsergebnissen E des Spracherkennungssystems 1 und bewirkt auch insbesondere eine Stummschaltung des Audioverstärkers 15 im Rahmen eines Dialogs mit dem Fahrer des Kraftfahrzeugs.

Für die weitere Funktionsweise des Spracherkennungssystems gemäß Fig. 1 existieren mehrere Ausführungsvarianten. Eine erste Ausführungsvariante soll mit Hilfe von Fig. 3 näher erläutert werden.

In dieser ersten Ausführungsvariante ist M=1 gesetzt, d.h. jedem Index j ist genau ein Referenzvektor y(j) zugeordnet. Einem Index j, der auf der Ordinate des in Fig. 3 dargestellten Diagramms aufgetragen ist, wird somit genau ein Referenzvektor y(j) zugeordnet. Der Speicher 8 überträgt die Referenzvektoren y(j) an den Funktionsblock 9, der zur Bildung von Vergleichsvektoren y'(i, j) aus den Referenzvektoren y(j) und den zweiten Spektralvektoren n(i) dient. Jedem Index j wird zum Zeitpunkt i ein Vergleichsvektor y'(i, j) zugeordnet. In der Ausführungsvariante gemäß Fig. 3 wird nur der eine Sprachpause beschreibende Vergleichsvektor y'(i, 0) fortlaufend an die zweiten Spektralvektoren n(i) angepaßt. Der Vergleichsvektor y'(i,0) wird ermittelt durch

$$y'(i,0) = n'(i) = a \cdot n(i).$$

a stellt einen konstanten und vorgebbaren Faktor dar, mit dem die Dämpfung des Störsignals N(t) durch Subtraktion der Störsignalschätzwerte N(t) mit Hilfe der Subtrahiermittel 5 beschrieben wird. Die Sprachsignalschätzwerte X(t) enthalten somit gegenüber den gestörten Sprachsignalen X(t) um den Faktor a gedämpfte Störsignalanteile. Der Faktor a nimmt den Wert a=1 an, wenn auf die Differenzbildung durch die Subtrahiermittel 5 verzichtet wird. Auch bei einem solchen Verzicht ist das Spracherkennungssystem 1 noch funktionsfähig. Die Differenzbildung durch die Subtrahiermittel 5 führt allerdings zu verbesserten Spracherkennungsergebnissen. Der Faktor a ist empirisch zu bestimmen und hängt von den Einsatzbedingungen des Sprachverarbeitungssystems 1 ab. Bei Verwendung logarithmischer Spektralwerte wird y'(i,0)=n'(i) durch Addition von ln(a) zu den Komponenten von n(i) gebildet. Für alle j > 0 gilt:

$$y'(i, j) = y'(j) = y(j) .$$

Die Vergleichsvektoren y'(i, j) sind somit zeitunabhängig, d.h. unabhängig von der Zeitvariablen i, und gleich den Referenzvektoren y(j).

In einer Vergleichseinheit 10 werden aus den vom Funktionsblock 9 gelieferten Vergleichsvektoren y'(i,j) und den zweiten Spektralvektoren x(i) Distanzen d(i,j) gemäß

$$d(i,j) = \sum_{d=1}^{D} | xd(i) - yd'(i,j) |^p$$

gebildet. xd(i) und yd'(i,j) stellen die Komponenten der ersten Spektralvektoren x(i) und der Vergleichsvektoren y'(i,j) dar. Der Wert p ist im vorliegenden Ausführungsbeispiel gleich 1 gesetzt. Eine Distanzberechnung mit p=2 ist aber ebenfalls möglich. Distanzen werden für alle Indizes j zu jedem Abtastzeitpunkt i gebildet. Sie stellen ein Maß für die Ähnlichkeit zwischen den ersten Spektralvektoren x(i) und den Vergleichsvektoren y'(i,j) dar, wobei die Ähnlichkeit zwischen den Vektoren mit abnehmender Distanz zunimmt. Die der Vergleichseinheit 10 zugeführten ersten Spektralvektoren x(i) sind in Fig. 3 den Abtastzeitpunkten i, die auf der Abszisse des Diagrammes aufgetragen sind, zugeordnet.

Mit Hilfe des Funktionsblocks 11 erfolgt eine Auswertung der von der Vergleichseinheit 10 ermittelten Distanzen d(i,j). Zu jedem Abtastzeitpunkt i wird für jeden Index j die jeweils zugehörige Distanz bestimmt. Die Auswertung erfolgt insbesondere nach dem Verfahren der dynamischen Programmierung (auch Viterbi-Algorithmus genannt), das z.B. im Artikel von H. Ney in IEEE Transactions on Acoustics, Speech, and Signal Processing, ASSP-32 (1984), Seiten 263 bis 271, beschrieben ist. Eine weitere Möglichkeit der Auswertung der Distanzen d(i,j) besteht in der Anwendung von Hidden-Markov-Modellen, in denen der Viterbi-Algorithmus oder ein anderer Optimierungsalgorithmus verwendet wird. Dabei wird im Diagramm j(i) gemäß Fig. 3 der Pfad ermittelt, der auf die kleinste Distanzsumme führt.

Im Ausführungsbeispiel gemäß Fig. 3 enthält das Vokabular des Spracherkennungssystems 1 u.a. das Wort "stop", dessen Laute durch die Referenzvektoren y(1) bis y(4) repräsentiert werden. Der Spracherkenner sei Bestandteil eines Dialogsystems, welches zunächst das Wort "stop" als Ansage Ñ(t) ausgibt. Diese Ansage bewirkt ein als Störsignal wirkendes Echosignal N(t), daß Bestandteil des mit dem Empfangszweig 2 empfangenen Signals X(t) wird (erstes "stop" in X(t)). Die Echolaufzeit ist in Fig. 3 als vernachlässigbar klein vorausgesetzt. Anschließend wird das Wort "stop" gesprochen und vom Empfangszweig 2 des Spracherkennungssystems 1 als zu erkennendes Sprachsignal S(t) aufgenommen. Das Sprachsignal S(t) ist nur Bestandteil des Signal X(t) und nicht Bestandteil des Signals Ñ(t), das unabhängig von S(t) generiert wird. Durch Wiederholung einzelner Buchstaben sollen in Fig. 3 Variationen der Sprechgeschwindigkeit veranschaulicht werden. Die dargestellte Zuordnung der Wortbestandteile (Buchstaben) zu den Spektralvektoren x(i) ist nicht zwingend. Auch längere oder kürzere Wortbestandteile sind prinzipiell durch jeweils einen Spektralvektor x(i) beschreibbar.

Bei der Berechnung der Distanzen d(i,j), die zusammen eine Distanzmatrix bilden, werden die vom Funktionsblock 6 erzeugten ersten Spektralvektoren x(i) mit den Vergleichsvektoren y'(i,j) verglichen, wobei y'(i, 0) = n'(i) das störende Echosignal N(t) widerspiegelt. Dadurch ergeben sich für das erste Wort des Signals X(t), das dem störenden Echosignal entspricht, besonders kleine Distanzen für den Index j =0.

Da das störende Echosignal in diesem Beispiel auch im Erkennungsvokabular enthalten ist, wäre es auch durch die Folge y(1), y(2), y(3), y(3), y(4) von Referenzvektoren bzw. durch die Folge y'(i,1), y'(i,2), y'(i,3), y'(i,3), y'(i, 4) von angepaßten Vergleichsvektoren beschreibbar, was in Fig. 3 als gestrichelter Pfad dargestellt ist. Dennoch liegt der Pfad für die Abtastzeitpunkte i=1 bis i=6 beim Index j=0, da beim gestrichelten Pfad eine allgemeine Repräsentation des Wortes "stop" mit einer spezifischen Artikulation dieses Wortes verglichen wird, während für j=0 keinerlei artikulatorische Variation den Vergleich beeinträchtigen und die Distanzwerte erhöhen kann.

Das zweite Wort des Signals X(t), das das Sprachsignal S(t), d.h. das zu erkennende Nutzsignal darstellt, liefert hingegen nur im Vergleich mit der Folge y(1), y(1), y(2), y(3), y(4) kleine Distanzen d(i,j), da der Vektor n'(i) in diesem Bereich eine Sprachpause darstellt.

Auf diese Weise liefert der Funktionsblock 11 den in Fig. 3 dargestellten Zuordnungspfad j(i), der während des Echos (erstes "stop") im Signal X(t) auf Sprachpause und während des tatsächlich gesprochenen Wortes (zweites "stop") das erkannte Wort beschreibt. Dieser Zuordnungpfad j(i) entspricht dem vom Funktionsblock 11 gelieferten Erkennungsergebnis E.

Sprachsignale als Störsignale N(t), wie sie z.B. als Echos in Dialogsystemen auftreten, sind für die meisten Spracherkennungssysteme besonders problematisch, da sie bei fehlendem Nutzsignal S(t) trotz starker Dämpfung leicht zu fehlerhaften Einfügungen von Wörtern in das vom Funktionsblock 11 gelieferte Erkennungsergebnis E führen, d.h. zu einem fehlerhaften Pfad j(i). Dies wird mit dem erfindungsgemäßen Spracherkennungssystem vermieden.

Treten das Störsignal Ñ(t) und das Nutzsignal (Sprachsignal) S(t) gleichzeitig auf, reicht es nicht aus, allein den einer Nutzsignalpause entsprechenden Referenzvektor y(0) zu ersetzen. Es müssen vielmehr alle Referenzvektoren y(j) angepaßt werden, was in Fig. 3 nicht dargestellt ist.

Die angepaßten Vergleichsvektoren sind nach der Formel

$$y'(i,j) = y(j) + n'(i)$$

zu bilden.

Bei der Verwendung von logarithmischen Spektralwerten sind die Komponenten der angepaßten Vergleichsvektoren nach der Formel

$$yd'(i,j) = \ln (\exp(yd(j)) + \exp(nd'(i)))$$

zu berechnen. Zur Reduzierung des Rechenaufwands werden diese Komponenten durch die Formel

$$yd'(i,j) = \max (yd(j), nd'(i))$$

angenähert.

Durch diese Maßnahmen wird eine Verdeckung der sprachlichen Information modelliert, da der für den Index j und das Frequenzband d gespeicherte Spektralwert yd(j) durch den momentanen Störsignalspektralwert nd'(i) ersetzt wird, wenn dieser einen höheren Wert besitzt. Auf diese Weise werden momentane Verdeckungen von Teilen der sprachlichen Information durch das Störsignal Ñ(t) bzw. N(t) beim Vergleich berücksichtigt und damit die Erkennung eines Wortes auch dann noch ermöglicht, wenn einzelne Laute vollständig im Störgeräusch untergehen.

Werden Hochpaß-gefilterte logarithmische Spektralwerte als Komponenten der Referenzvektoren verwendet, so kann die Verdeckung nicht wie oben beschrieben durch Leistungsaddition berechnet werden. Die Erfindung ist für diesen Fall zu modifizieren, was im folgenden erläutert wird.

Für den Fall, daß die Störsignalleistung in den Sprachsignalschätzwerten X̂(t) gegenüber der Leistung des Störsignalanteils N(t) nicht in allen Frequenzbändern gleichmäßig um einen konstanten Faktor a gedämpft ist, muß das Spracherkennungssystem 1 zur Erreichung optimaler Spracherkennungsergebnisse modifiziert werden. Insbesondere wenn auf das im Zeitbereich arbeitende adaptive Filter 4 verzichtet wird, hängt n'(i) nicht nur von einem Spektralvektor n(i) ab, sondern entsprechend der Dauer der zur Übertragungsfunktion zwischen der Störsignalquelle und dem Empfangszweig 2 gehörenden Impulsantwort von mehreren Spektralvektoren n(i - r) mit r = 0, 1, ..., R.

Entsprechend diesen Überlegungen wird die Erfindung dahingehend modifiziert, daß durch den Funktionsblock 9 Vergleichvektoren y'(i, j) derart gebildet werden, daß einem Index j zu einem Abtastzeitpunkt i mindestens ein Referenzvektor y(j, m) und zusätzlich ein oder mehrere aufeinanderfolgende zweite Spektralvektoren n(i - r) zugeordnet werden. Im zugehörigen Ausführungsbeispiel nach Fig. 4 sind für jeden Index j ein Referenzvektor y(j) und zwei aufeinanderfolgende zweite Spektralvektoren n(i-1) und n(i) als Vergleichsvektoren y'(i, j, m) mit m = -R,...,M = -1, 0, 1 vorgesehen (M = 1, R=1).

Es gilt:

$$y'(i, j, -1) = n(i - 1)$$

$$y'(i, j, 0) = n(i)$$

$$y'(i, j, 1) = y(j).$$

Dazu wird im Funktionsblock 9 der Spektralvektor n(i-1) zwischengespeichert. Mit Bewertungszahlen g(i,j,m) mit m = -R, ..., M wird berücksichtigt, ob eine Verdeckung der mit n(i) bzw. n(i - r) beschriebenen Störung durch einen dem Index j entsprechenden Abschnitt eines Referenzwortes zu erwarten ist. Dieser Ansatz geht von der Annahme aus, daß bei der Addition von zwei Signalen zu jedem Zeitpunkt im Regelfall ein Signal das andere weitgehend verdeckt und damit die Spektralvektoren im wesentlichen einem der beiden Signale entsprechen. Für M> 1 (d.h. mehrere Referenzvektoren sind einem Index j zugeordnet) beschreiben die entsprechenden Bewertungszahlen g(i,j,m), ob ein Referenzvektor im entsprechenden Anwendungsfall im Vergleich zu den anderen Referenzvektoren mit gleichem Index j mehr oder weniger als zur Beschreibung eines Sprachsignals geeignet erachtet wird.

Mit der auf diese Weise gebildeten zeitabhängigen Menge an Vergleichsvektoren, die vom Funktionsblock 9 an die Vergleichseinheit 10 geliefert werden, ergeben sich die von der Vergleichseinheit 10 zu bestimmenden Distanzen zu

$$d(i,j) = \min_{m=-R}^{M} \left\{ g(i,j,m) + \sum_{d=1}^{D} |xd(i) - yd'(i,j,m)|^p \right\}$$

$$= \min \left\{ \min_{m=1}^{M} \left\{ g(i,j,m) + \sum_{d=1}^{D} |xd(i) - yd(j,m)|^p \right\}, \right.$$

$$\left. \min_{r=0}^{R} \left\{ g(i,j,-r) + \sum_{d=1}^{D} |xd(i) - nd(i-r)|^p \right\} \right\}$$

Die Bewertungszahlen g(i,j,m) sind zunächst allgemein angesetzt. Wie oben bereits beschrieben, ist p insbesondere gleich 1 zu setzen, wobei auch p=2 möglich ist.

Die erweiterte Distanzberechnung erfordert nur einen geringen Mehraufwand, da die zusätzlichen Terme allein durch die Bewertungszahlen g(i, j, -r) von j abhängen können und die Distanzen zwischen x(i) und den Störvektoren n(i) bis n(i - N) für jeden Zeitpunkt i nur einmal zu berechnen sind. Die zusätzlichen Terme sind diejenigen Terme, wo r als Laufvariable auftaucht.

Bei Ermittlung einer Distanz d(i,j) nach der Ausführungsvariante dadurch die Vergleichseinheit 10 werden Teildistanzen zwischen den Spektralvektoren x(i) und diesen drei Vektoren jeweils mit den Bewertungszahlen g(i,j,m) addiert und anschliessend das Minimum ausgewählt. Im vorliegenden Beispiel ist für alle zeitinvarianten Vergleichsvektoren y'(i,j,1), die den im Speicher 8 abgelegten Referenzvektoren y(j) entsprechen, als Bewertungszahl g(i,j,1) der Wert 0 festgelegt. Wird keine Vorkenntnis über die Echoverzögerung des Störsignals Ñ(t) vorausgesetzt, so ist g(i,j,-1) = g(i,j,0) ein zu guten Spracherkennungsergebnissen führender Ansatz.

Die Bewertungszahlen g(i,j,m) müssen insbesondere sicherstellen, daß im Falle eines reinen Störsignals (X(t) = N(t)) der Pausenzustand j=0 bevorzugt wird. Dies wird erreicht, wenn für j ≥ 1 Bewertungszahlen mit g(i,j,0) > g(i,0,0) festgelegt werden, was in Fig. 4 durch Unterstreichen der entsprechenden Vergleichsvektoren n(i) bzw. n(i - 1) dargestellt ist.

Für relative große Signalleistungen und sicher erkennbare Laute, z.B. Vokale, kann die Bewertungszahl $g(i, j,0)$ für $j \geq 1$ besonders groß gewählt werden, da die Erkennung des zugehörigen Wortes nur in Betracht kommt, wenn ein solcher Laut nicht durch Störsignal N(t) verdeckt ist. Auf diese Weise wird durch die Abhängigkeit der Bewertungszahlen $g(i,j,m)$ von dem Index j beschrieben, ob mit einer Verdeckung der einzelnen Wortabschnitte bzw. durch Störsignal N(t) zu rechnen ist, was insbesondere für den Pausenzustand gilt.

In Fig. 4 sind dieselben Signale wie in Fig. 3 zugrundegelegt. Allerdings ist hier eine Echoverzögerung des Echosignals, d.h. des ersten "Stop", im Signal X(t) gegenüber dem Signal Ñ(t) berücksichtigt. Es ist eine Echoverzögerung von ungefähr einem Abtastintervall dargestellt. Trotz dieser Echoverzögerung liefert das Spracherkennungssystem 1 das richtige Erkennungsergebnis E. Die Gefahr von Auslassungsfehlern bei der Spracherkennung ist sehr gering, da jeder einzelne Spektralvektor x(i) nur mit R+1 Störvektoren (zweiten Spektralvektoren), also einem sehr kurzen Abschnitt des Störsignals Ñ(t) bzw. N(t) zusätzlich verglichen wird.

Im Fall mehrkanaliger Störsignale nach Fig. 2 werden die Signale $\tilde{N}_1(t)$, $\tilde{N}_2(t)$ und $\tilde{N}_3(t)$ in diesem Fall direkt als Störsignalschätzwerte von den Spektralanalysemitteln des Funktionsblockes 7 zu zweiten Spektralvektoren $n_1(i)$, $n_2(i)$ und $n_3(i)$ weiterverarbeitet, wobei für einen Wert der Zeitvariablen i die Menge aus drei Spektralvektoren $n_1(i)$, $n_2$ (i) und $n_3(i)$ wie eine Menge aus zeitlich aufeinander folgenden zweiten Spektralvektoren (n(i-1) und n(i)) bei einem nur aus einem Empfangspfad bestehenden Empfangszweig 3 (s. Fig. 4) vom Funktionsblock 9 jedem der Indizes j zugeordnet wird. Auch eine Kombination der Ansätze derart, daß sowohl mehrere Empfangspfade als auch mehrere zeitlich aufeinanderfolgende Spektralvektoren für jeden Index j berücksichtigt werden, ist eine vorteilhafte Ausführungsform, beispielsweise wird dann den Indizes j für einen Wert der Zeitvariablen i jeweils eine Menge aus zweiten Spektralvektoren $n_1(i-1)$, $n_1(i)$, $n_2(i-1)$, $n_2(i)$, $n_3(i-1)$ und $n_3(i)$ zugeordnet.

Insbesondere bei großen Echolaufzeiten hängt die Störsignalunterdrückung im Signal $\hat{X}(t)$ von der Genauigkeit des adaptiven Filters 4 ab. Diese Anforderungen werden durch die fortlaufende Anpassung der Vergleichsvektoren im Funktionsblock 9 wesentlich reduziert. Bei allen hier angegebenen Ausführungsvarianten kann auf das adaptive Filter 4 verzichtet werden. Die Differenzbildung durch die Subtrahiermittel 5 ist ebenfalls wie schon oben erwähnt nicht zwangsweise erforderlich.

Mit dem erfindungsgemäßen Spracherkennungssystem 1 ist eine zuverlässige Spracherkennung für Anwendungsfälle realisierbar, bei denen eine Sprachsteuerung eines Gerätes vorgesehen ist, z.B. beim Einsatz in Mobiltelefonen oder Rundfunkempfängern, die in Kraftfahrzeugen betrieben werden, in Anrufbeantwortern oder automatischen Auskunftssystemen, mit denen über ein Telefonnetz kommuniziert wird.

Bei in Kraftfahrzeugen betriebenen Mobiltelefonen oder Rundfunkempfängern können akustische Echos von an einen Benutzer über eine akustische Benutzerschnittstelle ausgegebenen Sprachansagen als Störsignale auftreten. Bei Rundfunkempfängern in Kraftfahrzeugen kann eine Erkennung von Sprachsignalen eines Benutzers auch durch die Ausgabe von Rundfunksendungen (z.B. Musik) gestört sein. Bei Anrufbeantwortern, die während einer Fernabfrage durch Sprachsignale steuerbar sind, treten Leitungsechos als Störsignale auf, die durch Reflexionen von Ansagen des Anrufbeantworters bei der Übertragung zum Benutzer verursacht werden. Bei automatischen Auskunftssystemen treten wie beim Anrufbeantworter durch Sprachansagen verursachte Leitungsechos als Störsignale auf. Der störende Einfluß solcher Leitungsechos auf die Spracherkennung solcher Geräte wird durch das erfindungsgemäße Spracherkennungssystem minimiert.

Weiterhin kann mit Hilfe des Spracherkennungssystem 1 eine Sprachsteuerung von Teilfunktionen von Kraftfahrzeugen realisiert werden, z.B. die Steuerung eines Fensterhebers. Auch zur Senkung der Fehlerrate bei der Spracherkennung von Diktiersystemen, die gesprochene Sprache direkt in Text umsetzen, kann das erfindungsgemäße Spracherkennungssystem eingesetzt werden.

Da bei dem beschriebenen Spracherkennungssystem auf eine Schätzung von Stör- und Nutzsignalanteilen verzichtet wird und Entscheidungen über die Interpretation einzelner Zeitabschnitte des jeweiligen Empfangssignals als Nutz- oder Störsignal erst im Zusammenhang mit der abschließenden Erkennungsentscheidung getroffen werden, verhält sich das Spracherkennungssystem sehr robust gegen Störsignale.

Der zusätzlich erforderliche Rechenaufwand bei der Spracherkennung ist gering, so daß das Spracherkennungssystem sowohl für aufwendige Anwendungen mit großem Vokabular an erkennbaren Worten als auch für Anwendungen mit entsprechendem kleineren Vokabularumfang einsetzbar ist.

**Patentansprüche**

**1.** Spracherkennungssystem zum Empfang von mit Störsignalen (N) überlagerten Sprachsignalen (S) mit

- ersten Spektralanalysemitteln (6) zur Lieferung von aus den gestörten Sprachsignalen (X) abgeleiteten und in ersten Spektralvektoren (x) zusammengefaßten ersten Spektralwerten (xd),

- Mitteln (3, 4) zur fortlanfenden Lieferung von Schätzwerten (N) der momentanen Störsignale (N),
- zweiten Spektralanalysemitteln (7) zur Bildung von in zweiten Spektralvektoren (n) zusammengefaßten zweiten Spektralwerten (nd) aus den Störsignalschätzwerten (N) ,
- einer Speichereinheit (8) zur Speicherung von aus Referenzspektralwerten (yd) bestehenden Referenzvektoren (y), denen Indizes (j) zugeordnet sind und die den Spektren von Referenzsprachsignalen entsprechen,
- Mitteln (9) zur Bildung von den Indizes (j) zugeordneten Vergleichsvektoren (y') aus den Referenzvektoren (y) und den zweiten Spektralvektoren (n), wobei eine fortlaufende Anpassung von mindestens einem der Vergleichsvektoren (y') an die jeweils vorliegenden zweiten Spektralvektoren (n) vorgesehen ist, und
- Mitteln (10, 11) zur Auswahl von Indizes (j) durch Vergleich der Vergleichsvektoren (y') mit den ersten Spektralvektoren (x).

2. Spracherkennungssystem nach Anspruch 1,
**dadurch gekennzeichnet,**
**daß** zur Bildung der Schätzwerte (N) der Störsignale (N) eine unabhängige Aufnahme der Störsignale (N) in der Nähe einer zugehörigen Störsignalquelle vorgesehen ist.

3. Spracherkennungssystem nach einem der Ansprüche 1 oder 2,
**dadurch gekennzeichnet,**
**daß** zur Bildung der Schätzwerte (N) der Störsignale (N) Echos von a priori bekannten Audiosignalen nachgebildet werden.

4. Spracherkennungssystem nach einem der Ansprüche 1 bis 3,
**dadurch gekennzeichnet,**

**daß** ein adaptives Filter (4) zur Filterung von Signalen (Ñ) der Störsignalquelle zur Bildung der Schätzwerte (N) der Störsignale (N) vorgesehen ist und
**daß** Mittel (5) zur Subtraktion der so gebildeten Schätzwerte (N) von den gestörten Sprachsignalen (X) vorgesehen sind.

5. Spracherkennungssystem nach einem der Ansprüche 1 bis 4,
**dadurch gekennzeichnet,**
**daß** vorgesehen ist, den einer Sprachsignalpause (j=0) entsprechenden Vergleichsvektor (y') fortlaufend durch den jeweils vorliegenden zweiten Spektralvektor (n) zu ersetzen.

6. Spracherkennungssystem nach einem der Ansprüche 1 bis 4,
**dadurch gekennzeichnet,**
**daß** vorgesehen ist, alle Vergleichsvektoren (y') an den jeweils vorliegenden zweiten Spektralvektor (n) anzupassen.

7. Spracherkennungssystem nach einem der Ansprüche 1 bis 4,
**dadurch gekennzeichnet,**

**daß** jeweils einem Index (j) mindestens ein Referenzvektor (y) und ein oder mehrere aufeinanderfolgende zweite Spektralvektoren (n(i), n(i-1), ...) zur Bildung einer entsprechenden Anzahl an Vergleichsvektoren (y') für diesen Index (j) zugeordnet sind und
**daß** beim Vergleich mit den ersten Spektralvektoren (x) eine Bewertung der einzelnen Vergleichsvektoren (y') durch Addition von Bewertungszahlen (g) zu der jeweiligen Vektordistanz vorgesehen ist.

8. Spracherkennungssystem nach einem der Ansprüche 1 bis 7,
**dadurch gekennzeichnet,**
**daß** es zur Erkennung von auf akustischem Weg an ein Telekommunikationsgerät übertragenen Sprachsignalen eines nahen Benutzers und zur Steuerung von Teilfunktionen des Telekommunikationsgeräts gemäß den erkannten Sprachsignalen vorgesehen ist.

9. Spracherkennungssystem nach einem der Ansprüche 1 bis 8,
**dadurch gekennzeichnet,**
**daß** es zur Erkennung von über ein Fernsprechnetz an ein Telekommunikatonsgerät übertragenen Sprachsignalen und zur Steuerung von Teilfunktionen des Telekommunikationsgeräts vorgesehen ist.

**10.** Spracherkennungssystem nach Anspruch 8 oder 9,
**dadurch gekennzeichnet,**
**daß** als Telekommunikationsgerät ein Mobiltelephon verwendet wird.

**11.** Spracherkennungssystem nach Anspruch 8 oder 9,
**dadurch gekennzeichnet,**
**daß** als als Telekommunikationsgerät ein Anrufbeantworter verwendet wird.

**12.** Spracherkennungssystem nach einem der Ansprüche 1 bis 7,
**dadurch gekennzeichnet,**
**daß** es zur Steuerung von Teilfunktionen eines Rundfunkempfängers eines Kraftfahrzeuges vorgesehen ist.

**13.** Spracherkennungssystem nach einem der Ansprüch 1 bis 7,
**dadurch gekennzeichnet,**
**daß** es zur Steuerung von Teilfunktionen eines Kraftfahrzeugs dient.

**14.** Elektrisches Gerät mit einem Spracherkennungssystem nach einem der Ansprüche 1 bis 13,
**dadurch gekennzeichnet,**
**daß** Teilfunktionen dieses oder eines anderen elektrischen Geräts in Abhängigkeit von erkannten Sprachsignalen des Spracherkennungssystems gesteuert werden.

**Claims**

**1.** A speech recognition system for receiving speech signals (S) superimposed by noise signals (N), comprising

- first spectral analysis means (6) for producing first spectral values (xd) combined to first spectral vectors (x) derived from the disturbed speech signals (X),
- means (3, 4) for continuously producing estimates (N) of the instantaneous noise signals (N),
- second spectral analysis means (7) for producing second spectral values (nd) combined to second spectral vectors (n) from the noise signal estimates (N),
- a memory unit (8) for storing reference vectors (y) formed by reference spectral values (yd), to which reference vectors are assigned indices (j), and which reference vectors correspond to the spectrums of reference speech signals,
- means (9) for producing comparison vectors (y') assigned to the indices (j) from the reference vectors (y) and the second spectral vectors (n), a continuous adaptation being effected of at least one of the comparison vectors (y') to the respectively occurring second spectral vectors (n), and
- means (10, 11) for selecting indices (j) by comparing the comparison vectors (y') with the first spectral vectors (x).

**2.** A speech recognition system as claimed in Claim 1,
**characterized**
**in that** noise signals (M) are independently captured in the neighborhood of an associated noise signal source to form the estimates (N) of the noise signals (N).

**3.** A speech recognition system as claimed in one of the Claims 1 or 2,
**characterized**
**in that** echoes of audio signals known a priori are copied to form the estimates (N) of the noise signals (N).

**4.** A speech recognition system as claimed in one of the Claims 1 to 3,
**characterized**
**in that** an adaptive filter (4) is used for filtering signals (Ñ) of the noise signal source to form the estimates (N) of the noise signals (N) and in that means (5) are provided for subtracting the estimates (N) thus formed from the disturbed speech signals (X).

**5.** A speech recognition system as claimed in one of the Claims 1 to 4,

**characterized**
**in that** the comparison vector (y') corresponding to a speech signal pause (j = 0) is continuously replaced by the respective previous second spectral vector (n).

6. A speech recognition system as claimed in one of the Claims 1 to 4,
**characterized**
**in that** all the comparison vectors (y') are adapted to the respective previous second spectral vector (n).

7. The speech recognition system as claimed in one of the Claims 1 to 4,
**characterized**
**in that** one index (j) is assigned at least a reference vector (y) and one or various successive second spectral vectors (n(i), n(i-1), ...) to form a respective number of comparison vectors (y') for this index (j), and in that for a comparison with the first spectral vectors (x), the individual comparison vectors (y') are weighted by adding weights (g) to the respective vector distance.

8. A speech recognition system as claimed in one of the Claims 1 to 7,
**characterized**
**in that** it recognizes speech signals of a near-end user transmitted along an acoustic path to a telecommunication device and controls sub-functions of the telecommunication device in accordance with the recognized speech signals.

9. A speech recognition system as claimed in one of the Claims 1 to 8,
**characterized**
**in that** it recognizes speech signals transmitted by a telephone network to a telecommunication device and controls sub-functions of the telecommunication device.

10. A speech recognition system as claimed in Claim 8 or 9,
**characterized**
**in that** a mobile telephone is used as the telecommunication device.

11. A speech recognition system as claimed in Claim 8 or 9,
**characterized**
**in that** a telephone answering machine is used as the telecommunication device.

12. A speech recognition system as claimed in one of the Claims 1 to 7,
**characterized**
**in that** it controls sub-functions of a radio receiver of a motor vehicle.

13. A speech recognition system as claimed in one of the Claims 1 to 7,
**characterized**
**in that** it controls sub-functions of a motor vehicle.

14. An electric device comprising a speech recognition system as claimed in one of the Claims 1 to 13,
**characterized**
**in that** sub-functions of this device or of another electric device are controlled in dependence on recognized speech signals of the speech recognition system.


**Revendications**

1. Système de reconnaissance de la parole en vue de la réception de signaux de parole (S) superposés par des signaux parasites (N) avec

   - des premiers moyens d'analyse spectrale (6) en vue de la délivrance de premières valeurs spectrales (xd) dérivées des signaux de parole parasites (X) et combinés dans des premiers vecteurs spectraux (x),
   - des moyens (3,4) en vue de la délivrance continue d'estimations (N) des signaux parasites instantanés (N),
   - des deuxièmes moyens d'analyse spectrale (7) en vue de la formation de deuxièmes valeurs spectrales (nd) combinées dans des deuxièmes vecteurs spectraux (n) à partir des estimations des signaux parasites (Ñ),

- une unité de mémoire (8) en vue de l'enregistrement de vecteurs de référence (y) composés de valeurs spectrales de référence (yd) auxquels sont affectés des indices (j) et qui correspondent aux spectres des signaux de parole de référence,
- des moyens (9) en vue de la formation de vecteurs de comparaison (y') affectés aux indices (j) à partir des vecteurs de référence (y) et des deuxièmes facteurs spectraux (n), une adaptation continue d'au moins une des vecteurs de comparaison (y') aux deuxièmes vecteurs spectraux (n) respectivement présents étant prévue, et
- des moyens (10, 11) en vue de la sélection d'indices (j) par comparaison des vecteurs de comparaison (y') avec les premiers vecteurs spectraux (x).

2. Système de reconnaissance de la parole selon la revendication 1,
**caractérisé en ce**
**qu'**en vue de la formation des estimations (N) des signaux parasites (N), il est prévu un enregistrement indépendant des signaux parasites (N) à proximité d'une source de signaux parasites correspondante.

3. Système de reconnaissance de la parole selon l'une des revendications 1 ou 2,
**caractérisé en ce**
**qu'**en vue de la formation des estimations (N) des signaux parasites (N), des échos de signaux audio a priori connus sont reproduits.

4. Système de reconnaissance de la parole selon l'une des revendications 1 à 3,
**caractérisé en ce**

**qu'**un filtre adaptatif (4) est prévu en vue du filtrage de signaux (Ñ) de la source de signaux parasites pour la formation des estimations (N) des signaux parasites (N) et
que des moyens (5) sont prévus en vue de la soustraction des estimations (Ñ) ainsi formées des signaux de parole parasités (n).

5. Système de reconnaissance de la parole selon l'une des revendications 1 à 4,
**caractérisé en ce**
**qu'**il est prévu de remplacer en continu le vecteur de comparaison (y') correspondant à une pause du signal de parole (j=0) par le deuxième vecteur spectral (n) respectivement présent.

6. Système de reconnaissance de la parole selon l'une des revendications 1 à 4,
**caractérisé en ce**
**qu'**il est prévu d'adapter tous les vecteurs de comparaison (y') au deuxième vecteur spectral (n) respectivement présent.

7. Système de reconnaissance de la parole selon l'une des revendications 1 à 4,
**caractérisé en ce**

**qu'**au moins un vecteur de référence (y) et un ou plusieurs deuxièmes vecteurs spectraux successifs (n(i), n(i-1), ...) sont affectés à un indice (j) en vue de la formation d'un nombre correspondant de vecteurs de comparaison (y') pour cet indice (j) et
que lors de la comparaison avec les premiers vecteurs spectraux (x), une évaluation des différents vecteurs spectraux (y') est prévue par addition d'indices d'évaluation (g) à la distance vectorielle respective.

8. Système de reconnaissance de la parole selon l'une des revendications 1 à 7,
**caractérisé en ce**
**qu'**il est prévu la reconnaissance de signaux de parole d'un utilisateur proche, transmis sur voie acoustique à un appareil de télécommunication, et la commande de fonctions partielles de l'appareil de télécommunication conformément aux signaux de parole reconnus.

9. Système de reconnaissance de la parole selon l'une des revendications 1 à 8,
**caractérisé en ce**
**qu'**il est prévu la reconnaissance de signaux de parole transmis par l'intermédiaire d'un réseau de téléphonie à un appareil de télécommunication et la commande de fonctions partielles de l'appareil de télécommunication.

**10.** Système de reconnaissance de la parole selon l'une des revendications 8 ou 9,
**caractérisé en ce**
**qu'**un radiotéléphone mobile est utilisé comme appareil de télécommunication.

**11.** Système de reconnaissance de la parole selon l'une des revendications 8 ou 9,
**caractérisé en ce**
**qu'**un répondeur automatique est utilisé comme appareil de télécommunication.

**12.** Système de reconnaissance de la parole selon l'une des revendications 1 à 7,
**caractérisé en ce**
**qu'**il est prévu la commande de fonctions partielles d'un radiorécepteur d'un véhicule automobile.

**13.** Système de reconnaissance de la parole selon l'une des revendications 1 à 7,
**caractérisé en ce**
**qu'**il sert à la commande de fonctions partielles d'un véhicule automobile.

**14.** Appareil électrique avec un système de reconnaissance de la parole selon l'une des revendications 1 à 13,
**caractérisé en ce**
**que** des fonctions partielles de cet appareil électrique ou d'un autre sont commandées en fonction de signaux de parole reconnus du système de reconnaissance de la parole.

FIG. 1

FIG. 2

$y'(i,4) = y(4)$     p 4

$y'(i,3) = y(3)$     o 3

$y'(i,2) = y(2)$     t 2

$y'(i,1) = y(1)$     s 1

$y'(i,0) = n(i)$     - 0

$d(i,j) \longleftarrow$     $x(1)$  $x(2)$  $x(3) \cdots$

$\bar{N}(t)$   –  s  t  o‿o  p  –  –  –  –  –  –  –

$S(t)$   –  –  –  –  –  –  –  s‿s  t  o  p  –

$X(t)$   –  s  t  o‿o  p  –  s‿s  t  o  p  –

## FIG. 3

$\{n(i-1), n(i), y(4)\}$   p 4

$\{n(i-1), n(i), y(3)\}$   o 3

$\{n(i-1), n(i), y(2)\}$   t 2

$\{n(i-1), n(i), y(1)\}$   s 1

$\{n(i-1), n(i), y(0)\}$   - 0

$d(i,j) \longleftarrow$     $x(1)$  $x(2)$  $x(3) \cdots$

$\bar{N}(t)$   –  s  t  o‿o  p  –  –  –  –  –  –  –

$S(t)$   –  –  –  –  –  –  –  s‿s  t  o  p  –

$X(t)$   –  –  s  t  o‿o  p  s‿s  t  o  p  –

## FIG. 4